# EUROPÄISCHE PATENTANMELDUNG

(11) **EP 2 636 437 A1**
(43) Veröffentlichungstag der Anmeldung: **11.09.2013**
(21) Anmeldenummer: 13153287.1
(22) Anmeldetag: 30.01.2013
(51) Int. Cl.: B01D 35/16, B01D 36/00, F02M 37/22

(54) **Filtereinrichtung**

(30) Priorität: 09.03.2012 DE 102012004579
(71) Anmelder: MANN + HUMMEL GMBH, 71638 Ludwigsburg (DE)
(72) Erfinder: Dworatzek, Klemens, 68535 Edingen (DE); Zinic, Daniela, 67346 Speyer (DE)

(57) **Zusammenfassung**

Eine Filtereinrichtung (1) zum Filtern eines Fluids (33) mit einer Öffnung (14) zum Ablassen des Fluids (33), einem ersten Gegengewinde (13), einem Verschlusselement (12), welches für ein fluiddichtes Verschließen der Öffnung (14) mit einem Gewinde (11) desselben in das erste Gegengewinde (13) eingeschraubt ist, einem zweiten Gegengewinde (17), in welches zum gleichzeitigen Ausschrauben des Verschlusselements (12) aus dem ersten Gegengewinde (13) und dadurch Freigeben der Öffnung (14) zum Ablassen des Fluids (33) ein Anschlusselement (21) mit einem Gewinde (23) desselben einschraubbar ist.

## Beschreibung

### Technisches Gebiet

Die vorliegende Erfindung bezieht sich auf eine Filtereinrichtung zum Filtern eines Fluids.

### Stand der Technik

Filtereinrichtungen in Kraftfahrzeugen dienen insbesondere der Reinigung von Kraft- oder Schmierstoffen. Dazu weisen solche Filtereinrichtungen üblicherweise einen Filterbehälter auf, welcher ein Filterelement enthält. Der Filterbehälter weist Anschlüsse zum Zu- und Abführen der zu filternden bzw. gefilterten Flüssigkeit auf. Der eigentliche Filtervorgang findet statt, wenn die zu filternde Flüssigkeit das Filterelement im Inneren des Filterbehälters durchströmt. Beim Austausch des Filterelements oder auch zur Entsorgung der gesamten Filtereinrichtung ist es erforderlich, in dem Filterbehälter verbliebene Flüssigkeit aus diesem abzulassen. Beispielsweise beschreiben die DE 10 2008 051 269 A1 und die EP 15 22 338 A2 jeweils Filtereinrichtungen mit Mitteln, um das Ablassen einer Flüssigkeit aus dem entsprechenden Filterbehälter zu ermöglichen.

### Offenbarung der Erfindung

Es ist eine Aufgabe der vorliegenden Erfindung, eine verbesserte Filtereinrichtung bereitzustellen, welche sich insbesondere durch einen einfachen Aufbau sowie durch ein weitestgehend leckagefreies Ablassen der Flüssigkeit auszeichnet. Eine weitere Aufgabe der vorliegenden Erfindung besteht darin, ein verbessertes Verfahren zum Ablassen eines Fluids aus einer Filtereinrichtung bereitzustellen.

Demgemäß wird eine Filtereinrichtung zum Filtern eines Fluids mit einer Öffnung zum Ablassen des Fluids, einem ersten Gegengewinde, einem Verschlusselement und einem zweiten Gegengewinde vorgeschlagen. Das Verschlusselement ist für ein fluiddichtes Verschließen der Öffnung mit einem Gewinde desselben in das erste Gegengewinde eingeschraubt. In das zweite Gegengewinde ist zum gleichzeitigen Ausschrauben des Verschlusselements aus dem ersten Gegengewinde und dadurch Freigeben der Öffnung zum Ablassen des Fluids ein Anschlusselement mit einem Gewinde desselben einschraubbar.

Dadurch, dass das Verschlusselement im normalen Filterbetrieb der Filtereinrichtung mit dem ersten Gegengewinde verschraubt ist, wird eine zuverlässige Abdichtung der Öffnung zum Ablassen des Fluids gewährleistet. Indem das Verschlusselement gleichzeitig mit dem Einschrauben des Anschlusselements herausgeschraubt wird und dadurch die Öffnung zum Ablassen des Fluids freigegeben wird, ergibt sich ein einfacher mechanischer Aufbau und darüber hinaus eine einfache Bedienbarkeit. Ferner werden durch das gleichzeitige Ein- bzw. Ausschrauben Leckagen des Fluids in die Umgebung zumindest verringert. Das Herausschrauben des Verschlusselements aus dem ersten Gegengewinde kann teilweise oder vollständig erfolgen.

Gemäß einer Ausführungsform weist das Verschlusselement einen Kopplungsabschnitt auf, welcher mit einem Kopplungsabschnitt des Anschlusselements für das Ausschrauben des Verschlusselements drehfest in Eingriff bringbar ist. Mittels der Kopplungsabschnitte kann ein auf das Anschlusselement aufgebrachtes Drehmoment zum Einschrauben des Anschlusselements in das zweite Gegengewinde direkt auf das Verschlusselement übertragen werden, um dieses aus dem ersten Gegengewinde herauszuschrauben.

Beispielsweise kann der Kopplungsabschnitt des Verschlusselements sich parallel zur Drehachse des Gewindes des Verschlusselements erstreckende Vorsprünge aufweisen, welche mit korrespondierenden Vorsprüngen des Kopplungsabschnitts des Anschlusselements in Eingriff bringbar sind. Die Vorsprünge und die korrespondierenden Vorsprünge greifen somit in einer Richtung parallel zur Drehachse ineinander ein. Dadurch ergibt sich in Umfangsrichtung bezüglich der Drehachse ein Formschluss, welcher die erwähnte Übertragung des Drehmoments von dem Anschlusselement auf das Verschlusselement ermöglicht.

Gemäß einer weiteren Ausführungsform umfasst das Verschlusselement einen Dichtungsabschnitt, welcher in einem eingeschraubten Zustand des Verschlusselements gegen einen korrespondierenden, die Öffnung begrenzenden Dichtungsabschnitt abdichtet. Bevorzugt sind die beiden Dichtungsabschnitte aus einem Kunststoffmaterial gebildet. Alternativ oder zusätzlich kann ein O-Ring eingesetzt werden. Die Abdichtung kann auch durch Ausnutzung des Fluiddrucks im Filterbetrieb der Filtereinrichtung unterstützt werden.

Weiterhin kann das Verschlusselement einen das Gewinde aufweisenden Abschnitt umfassen, in welchem ein Durchbruch ausgebildet ist, durch den in einem zumindest teilweise ausgeschraubten Zustand des Verschlusselements das Fluid nach Passieren der Öffnung abläuft. Die Vorsprünge des Verschlusselements können den Abschnitt teilweise oder gänzlich ausbilden. Der Durchbruch ist bevorzugt als einseitig offener Schlitz zwischen zwei den Kopplungsabschnitt des Verschlusselements definierenden Vorsprüngen gebildet. Der Durchbruch kann das Gewinde selbst zumindest teilweise durchdringend, beispielsweise als ein rundes Loch oder Schlitz in dem Gewinde, ausgebildet sein. Alternativ kann der Durchbruch in einem Abschnitt zwischen dem Gewinde und dem Dichtungsabschnitt angeordnet sein. Auch in diesem Fall kann der Durchbruch beispielsweise als rundes Loch oder Schlitz ausgebildet sein.

Gemäß einer weiteren Ausführungsform weist die Filtereinrichtung ferner eine Wandung mit einer Öffnung sowie einen Einsatz auf, welcher in die Öffnung fluiddicht eingesetzt ist und die Öffnung zum Ablassen des Fluids ausbildet. Der Einsatz weist beispielsweise den korrespondierenden Dichtungsabschnitt auf. Der Einsatz kann aus Kunststoff ausgebildet sein. Gemäß einer Ausführungsform ist die Wandung Bestandteil eines Filterbehälters der Filtereinrichtung, welcher ein Filterelement aufnimmt und Anschlüsse für ein Zu- und Abführen des zu filternden bzw. gefilterten Fluids aufweist. Mit "Filterelement" ist hier ein Filtergewebe, Filtergelege, Filtervlies oder eine sonstige Filterstruktur, beispielsweise ein poröses Material, gemeint.

Gemäß einer weiteren Ausführungsform sind das erste und zweite Gegengewinde jeweils als Innengewinde ausgebildet. Entsprechend sind in diesem Fall das Gewinde des Verschlusselements und das Gewinde des Anschlusselements jeweils als Außengewinde ausgebildet. Es ist jedoch auch möglich, dass beispielsweise das erste Gegengewinde als Innengewinde und das zweite Gegengewinde als Außengewinde ausgebildet ist.

Bevorzugt sind das erste und zweite Gegengewinde koaxial zueinander angeordnet. "Koaxial" bezieht sich hier auf die jeweiligen Drehachsen der beiden Gegengewinde. Gemäß einer weiteren Ausführungsform gerät das Gewinde des Verschlusselements bei einem teilweisen oder vollständigen Einschrauben des Anschlusselements mit dem ersten Gegengewinde irreversibel außer Eingriff. Da sich das vollständig ausgeschraubte Verschlusselement dann im Inneren des Behälters der Filtereinrichtung befindet, kann dieses auch nicht wieder hineingeschraubt werden. Dadurch wird eine Einwegverwendung der Filtereinrichtung sichergestellt.

Weiterhin wird ein Satz mit der erfindungsgemäßen Filtereinrichtung und einem Anschlusselement vorgeschlagen. Das Anschlusselement ist zum gleichzeitigen Ausschrauben des Verschlusselements aus dem ersten Gegengewinde und dadurch Freigeben der Öffnung zum Ablassen des Fluids mit einem Gewinde desselben in das zweite Gegengewinde einschraubbar.

Gemäß einer Ausführungsform weist das Anschlusselement einen Kopplungsabschnitt auf, welcher mit dem Kopplungsabschnitt des Verschlusselements für das Ausschrauben des Verschlusselements drehfest in Eingriff bringbar ist. Bevorzugt weist der Kopplungsabschnitt des Anschlusselements sich parallel zur Drehachse des Gewindes des Anschlusselements erstreckende Vorsprünge auf, welche mit den Vorsprüngen des Kopplungsabschnitts des Verschlusselements in Eingriff bringbar sind.

Das Anschlusselement kann einen Rohrabschnitt aufweisen, welcher in einem eingeschraubten Zustand des Anschlusselements mit der Öffnung zum Ablassen des Fluids in fluidisch leitender Verbindung steht. Bevorzugt ist der Kopplungsabschnitt an einem Ende des Rohrabschnitts ausgebildet. An seinem anderen Ende weist der Rohrabschnitt bevorzugt eine Anschlussmöglichkeit für einen Schlauch zum Abführen des abgelassenen Fluids auf. Weiterhin trägt der Rohrabschnitt bevorzugt an seiner Außenseite und/oder an seinem einen Ende das Gewinde des Anschlusselements. Ferner kann an dem Rohrabschnitt ein mit diesem koaxial angeordneter Ring befestigt sein. Der Ring ermöglicht ein einfaches, manuelles Drehen des Anschlusselements, um dieses dadurch in das zweite Gegengewinde ein- und/oder aus diesem auszuschrauben.

Gemäß einer weiteren Ausführungsform weist das Anschlusselement, insbesondere ein Element zum Drehen des Anschlusselements für ein Ein- und/oder Ausschrauben desselben aus dem zweiten Gegengewinde, einen Auffang, insbesondere in Form einer Mulde, für zwischen dem zweiten Gegengewinde und dem Gewinde des Anschlusselements ausgetretenes Fluid auf. Dadurch wird eine Leckage des Fluids örtlich begrenzt. Weiterhin kann eine Öffnung in dem Rohrabschnitt des Anschlusselements im Bereich eines Bodens des Auffangs ausgebildet sein, mittels derer das ausgetretene Fluid (auch als Leckage bezeichnet) in den zentralen Kanal innerhalb des Rohrabschnitts hinein und in den Schlauch geführt wird.

Bei dem Fluid handelt es sich beispielsweise um eine Flüssigkeit, insbesondere um einen Kraftstoff oder Schmierstoff. Genauso kann es sich bei der Flüssigkeit um Wasser oder um wasserbasierte Lösungen handeln.

Gemäß einer Ausführungsform ist die Filtereinrichtung ein Ölfilter. Entsprechend ist das Fluid bei dieser Ausführungsform ein Öl.

Die Filtereinrichtung ist bevorzugt als Einwegfilter, insbesondere Einwegölfilter, ausgebildet. Zu Instandhaltungszwecken wird die gesamte Filtereinrichtung ausgetauscht, wobei zunächst das in der Filtereinrichtung enthaltene Fluid abgelassen und hiernach die Filtereinrichtung entsorgt wird.

Weiterhin wird ein Verfahren zum Ablassen eines Fluids aus einer Öffnung einer Filtereinrichtung zum Filtern des Fluids vorgeschlagen. Ein die Öffnung fluiddicht verschließendes Verschlusselement wird durch Einschrauben eines Anschlusselements gleichzeitig ausgeschraubt. Das Ausschrauben des Verschlusselements bewirkt, dass dieses die Öffnung freigibt, woraufhin das Fluid durch die Öffnung abgelassen wird. Bei der Filtereinrichtung kann es sich um die erfindungsgemäße Filtereinrichtung handeln.

Vorteile, die sich ergeben, sind: eine zuverlässige Abdichtung der Öffnung mittels des Verschlusselements im Filterbetrieb der Filtereinrichtung, ein einfacher mechanischer Aufbau sowie eine einfache Bedienbarkeit und Vermeidung von Leckage auf Grund des gleichzeitigen Ein- und Ausschraubens.

"Gleichzeitig" ist so zu verstehen, dass das Einschrauben des Anschlusselements und das Ausschrauben des Verschlusselements gleichzeitig stattfinden. Das Ausschrauben des Verschlusselements kann ein teilweises oder vollständiges Ausschrauben sein. Entsprechend kann auch das Einschrauben des Anschlusselements ein teilweises oder vollständiges Einschrauben sein.

Gemäß einer Ausführungsform ist das Verschlusselement für das fluiddichte Verschließen der Öffnung mit einem Gewinde desselben in ein erstes Gegengewinde eingeschraubt. Das Anschlusselement dann wird zum gleichzeitigen Ausschrauben des Verschlusselements aus dem ersten Gegengewinde mit einem Gewinde desselben in ein zweites Gegengewinde eingeschraubt.

Gemäß einer weiteren Ausführungsform weist das Verschlusselement einen Kopplungsabschnitt auf, welcher mit einem Kopplungsabschnitt des Anschlusselements für das Ausschrauben des Verschlusselements drehfest in Eingriff gebracht wird.

Gemäß einer weiteren Ausführungsform gerät das Gewinde des Verschlusselements bei einem teilweisen oder vollständigen Einschrauben des Anschlusselements mit dem ersten Gegengewinde irreversibel außer Eingriff.

Gemäß einer weiteren Ausführungsform werden die Filtereinrichtung und/oder ein Filterelement derselben nach dem Ablassen des Fluids entsorgt. Die Filtereinrichtung wird also als Einwegfiltereinrichtung genutzt.

Noch weiterhin wird eine Verwendung der erfindungsgemäßen Filtereinrichtung als Einwegfilter, insbesondere Einwegölfilter, vorgeschlagen.

Weitere mögliche Implementierungen der Erfindung umfassen auch nicht explizit genannte Kombinationen von zuvor oder im Folgenden bezüglich der Ausführungsbeispiele beschriebenen Merkmalen oder Ausführungsformen der Filtereinrichtung, des Satzes, des Verfahrens oder der Verwendung. Dabei wird der Fachmann auch Einzelaspekte als Verbesserungen oder Ergänzungen zu der jeweiligen Grundform der Erfindung hinzufügen oder abändern.

Weitere Ausgestaltungen der Erfindung sind Gegenstand der Unteransprüche sowie der im Folgenden beschriebenen Ausführungsbeispiele der Erfindung. Im Weiteren wird die Erfindung anhand von Ausführungsbeispielen unter Bezugnahme auf die beigelegten Figuren näher erläutert.

### Kurze Beschreibung der Zeichnungen

Es zeigt dabei:
- Fig. 1:: in einer teilweise ausgebrochenen Seitenansicht eine Filtereinrichtung gemäß einer Ausführungsform;
- Fig. 2:: einen Teilschnitt durch die Filtereinrichtung aus Fig. 1;
- Fig. 3:: in einer perspektivischen Ansicht ein Anschlusselement gemäß einer Ausführungsform;
- Fig. 4:: einen Satz umfassend die Filtereinrichtung aus Fig. 1 und das Anschlusselement aus Fig. 3;
- Fig. 5:: einen Teilschnitt aus Fig. 4, wobei sich ein Verschlusselement in seinem eingeschraubtem Zustand befindet; und
- Fig. 6:: die Ansicht aus Fig. 5, wobei sich das Verschlusselement in seinem ausgeschraubten Zustand befindet.

In den Figuren bezeichnen gleiche Bezugszeichen gleiche oder funktionsgleiche Elemente, soweit nichts Gegenteiliges angegeben ist.

### Ausführungsform(en) der Erfindung

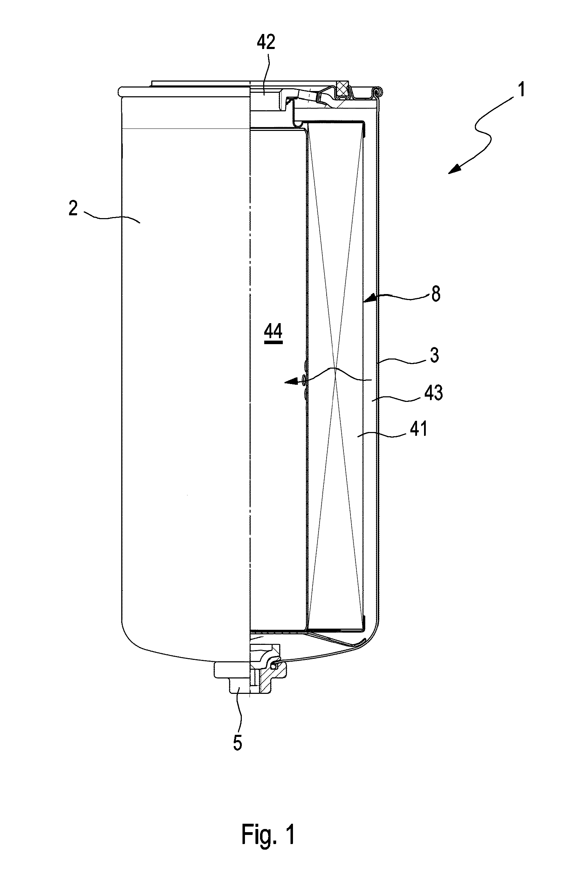

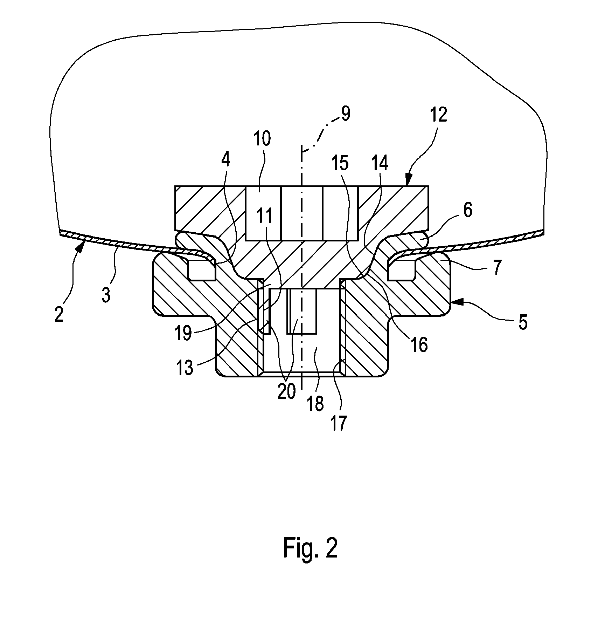

Fig. 1 zeigt in einer perspektivischen Teilansicht eine Filtereinrichtung 1 gemäß einer Ausführungsform. Fig. 2 zeigt einen Teilschnitt aus Fig. 1. Die Filtereinrichtung 1 wird nachfolgend zunächst mit Bezug auf die Fig. 1 und 2 näher erläutert.

Die Filtereinrichtung 1 ist beispielsweise als ein Einwegfilter ausgebildet, insbesondere als Einwegölfilter. Das heißt, wenn die Filterkapazität der Filtereinrichtung 1 erschöpft ist, wird diese gänzlich ausgetauscht und entsorgt, wobei jedoch zuvor noch in der Filtereinrichtung 1 enthaltenes Fluid, beispielsweise Öl, aus der Filtereinrichtung 1 abgelassen wird. Solche Filtereinrichtungen 1 werden auch als Filterpatronen des Wegwerftyps bezeichnet.

Die Filtereinrichtung 1 kann grundsätzlich zum Filtern eines beliebigen Fluids, also einer Flüssigkeit oder eines Gases, ausgebildet sein. Bevorzugt wird die Filtereinrichtung 1 gemäß dem vorliegenden Ausführungsbeispiel zum Filtern von Schmierstoffen oder Kraftstoffen für Kraftfahrzeuge eingesetzt.

Wie anhand der Fig. 1 und 2 zu erkennen, umfasst die Filtereinrichtung 1 einen Behälter 2, dessen Wandung 3 beispielsweise an einer Unterseite des Behälters 2 eine Öffnung 4 aufweist. In die Öffnung 4 ist ein Einsatz 5 fluiddicht eingesetzt. Dazu kann der Einsatz 5 umlaufende Ränder 6, 7 aufweisen, welche die Wandung 3 angrenzend an die Öffnung 4 zwischen sich aufnehmen und gegen diese fluiddicht anliegen. Der Einsatz 5 kann beispielsweise aus Kunststoff oder Metall ausgebildet sein. Gemäß einer alternativen Ausführungsform kann der Einsatz 5 einstückig mit der Wandung 3 des Behälters 2 ausgebildet sein.

In dem Behälter 2 kann, wie in Fig. 1 gezeigt, ein Filterelement 8 aufgenommen sein. Das Filterelement 8 kann einen Balg 41 aus gefaltetem Filtermedium umfassen. An einer Oberseite des Behälters 2 ist eine Öffnung 42 ausgebildet. Im Betrieb der Filtereinrichtung 1 wird das Fluid von einer Rohseite 43 durch den Balg hindurch (siehe den entsprechenden Pfeil) zu einer Reinseite 44 gepumpt. Von dort verlässt das gereinigte Fluid die Filtereinrichtung durch die Öffnung 42.

Wie in Fig. 2 gezeigt, weist der Einsatz 5 weiterhin ein erstes Gegengewinde 13 auf. In das erste Gegengewinde 13 ist in dem in Fig. 2 gezeigten Zustand, welcher einem normalen Filterbetrieb der Filtereinrichtung 1 entspricht, ein Verschlusselement 12 eingeschraubt. Das Verschlusselement 12 weist hierzu ein entsprechendes Gewinde 11 1 auf, welches durch Drehen um eine Drehachse 9 eingeschraubt wird. Das Verschlusselement 12 kann einen Schlüsselansatz 10 aufweisen, um dieses in das erste Gegengewinde 13 einzuschrauben.

Das Verschlusselement 12 verschließt eine Öffnung 14 zum Ablassen des Fluids. Die Öffnung 14 ist gemäß dem vorliegenden Ausführungsbeispiel in dem Einsatz 5 ausgebildet. Zwecks des fluiddichten Verschlusses der Öffnung 14 weisen der Einsatz 5 und das Verschlusselement 12 einen Dichtungsabschnitt 15 bzw. einen korrespondierenden Dichtungsabschnitt 16 auf. Das Verschlusselement 12 kann ebenfalls aus Kunststoff ausgebildet sein, so dass lediglich das Zusammenpressen der Dichtungsabschnitte 15, 16 im eingeschraubten Zustand des Verschlusselements 12 eine ausreichende Dichtigkeit gewährleistet. Zusätzlich oder alternativ kann auch ein O-Ring oder ein sonstiges Dichtmittel in diesem Bereich zur Abdichtung vorgesehen sein.

Der Einsatz 5 weist weiterhin ein zweites Gegengewinde 17 auf. Das erste und zweite Gegengewinde 13, 17 sind beispielsweise als Innengewinde in einem Kanal 18 des Einsatzes 5 ausgebildet. Das erste und zweite Gegengewinde 13, 17 können als Teile desselben Gewindes ausgeführt sein. Das beispielsweise als ein Außengewinde an einem sich an den Dichtungsabschnitt 15 anschließenden Abschnitt 19 des Verschlusselements 12 ausgebildete Gewinde 11 erstreckt sich in dem in Fig. 2 gezeigten Zustand in den Kanal 18 hinein. An dem freien Ende des Abschnitts 19 ist ein Kopplungsabschnitt ausgebildet, welcher mehrere, beispielsweise drei Vorsprünge 20 umfasst.

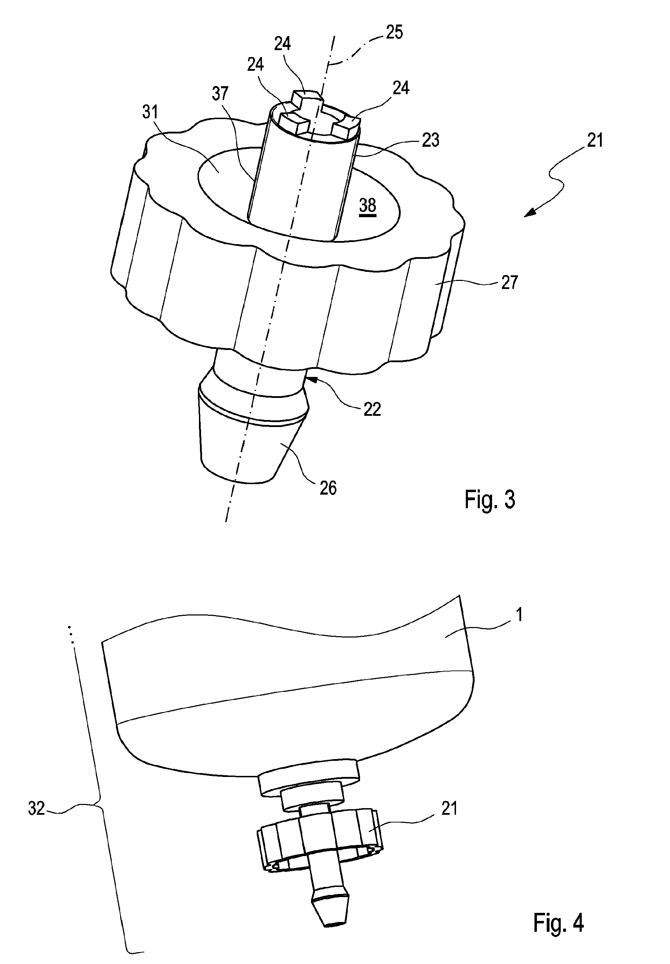

In das zweite Gegengewinde 17 kann ein Anschlusselement 21 eingeschraubt werden, welches nachfolgend mit Bezug auf die Fig. 3 und 4 näher beschrieben wird. Dabei zeigt Fig. 3 eine perspektivische Ansicht des Anschlusselements 21. Fig. 4 zeigt eine perspektivische Teilansicht eines Satzes umfassend die Filtereinrichtung 1 aus Fig. 1 sowie das Anschlusselement 21.

Das Anschlusselement 21 weist einen Rohrabschnitt 22 auf, welcher an seinem einen Ende ein Außengewinde 23 trägt.

An dem einen Ende des Rohrabschnitts 22 sind einen Kopplungsabschnitt ausbildende Vorsprünge 24 vorgesehen. Die Vorsprünge 24, beispielsweise drei solcher Vorsprünge, erstrecken sich parallel zu einer Drehachse 25 des Gewindes 23. Außerdem sind die Vorsprünge 24 um die Drehachse 25 vorzugsweise gleichmäßig verteilt angeordnet und erstrecken sich gemäß dem vorliegenden Ausführungsbeispiel weg von dem Gewinde 23.

An seinem anderen Ende weist der Rohrabschnitt 22 einen Anschlussstutzen 26 zum Anschließen eines nicht dargestellten Schlauchs auf.

Das Anschlusselement 21 umfasst weiterhin einen profilierten Ring 27, welcher koaxial mit dem Rohrabschnitt 22 angeordnet ist. Der Ring 27 ist mittels eines umlaufenden Stegs 31 fest mit dem Rohrabschnitt 22 verbunden. Der Ring 27 ist in etwa mittig zwischen den beiden Enden des Rohrabschnitts 22 angeordnet. Anstelle des Rings 27 könnte auch ein sonstiger Griff verwendet werden.

Der profilierte Ring 27 lässt sich mit einer Hand gut greifen, um das Gewinde 23 des Anschlusselements 22 in das zweite Gegengewinde 17, siehe Fig. 2, einzuschrauben. Der eingeschraubte Zustand ist in Fig. 4 dargestellt.

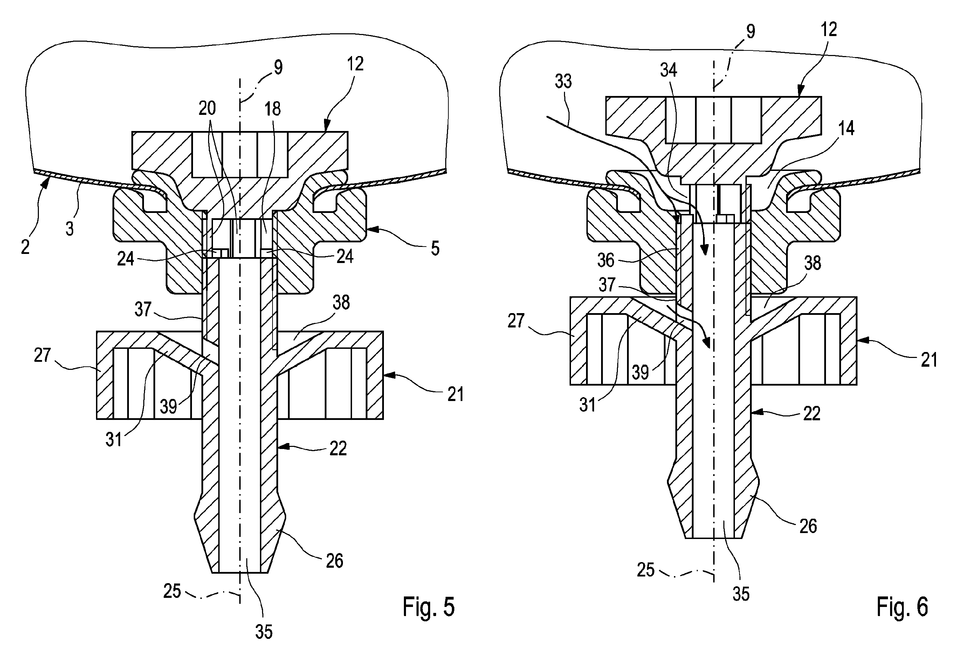

Nachfolgend wird nun insbesondere im Zusammenhang mit den Fig. 5 und 6, welche jeweils einen Teilschnitt aus Fig. 4 in unterschiedlichen Zuständen des Verschlusselements 12 bzw. des Anschlusselements 21 zeigen, das Zusammenspiel zwischen der Filtereinrichtung 1 und dem Anschlusselement 21 näher erläutert.

In dem in Fig. 2 dargestellten Filterbetrieb der Filtereinrichtung 1 dichtet das Verschlusselement 12 die Öffnung 14 zuverlässig ab, so dass kein Fluid aus dem Behälter 2 in die Umgebung austreten kann. Wird nun festgestellt, dass die Filtereinrichtung 1 entsorgt, zuvor jedoch noch in dem Behälter 2 verbliebenes Fluid abgelassen werden soll, so wird das Anschlusselement 21 zur Hand genommen und mit dessen einem Ende, welches die Vorsprünge 24 aufweist, in den Kanal 18 des Einsatzes 5 geschoben, bis die Vorsprünge 24 mit den Vorsprüngen 20 des Verschlusselements 12 in Eingriff gelangen (siehe Fig. 5). Anschließend wird der profilierte Ring 27 manuell gedreht, wobei das Gewinde 23 zunächst mit dem zweiten Gegengewinde 17 in Eingriff gelangt und hiernach zunehmend in dieses eingeschraubt wird. Gleichzeitig wird jedoch das manuell aufgebrachte Drehmoment mittels der Vorsprünge 20, 24 auf das Verschlusselement 12 übertragen, welches sich dadurch dreht und somit zunehmend aus dem ersten Gegengewinde 13 herausgeschraubt wird. Sodann kann Fluid 33, siehe Fig. 6, durch die Öffnung 14 und hiernach durch zwischen jeweils zwei Vorsprüngen 20 des Verschlusselements 12 gebildete Schlitze 34 und weiterhin durch einen Kanal 35 in dem Rohrabschnitt 22 in den nicht dargestellten Schlauch strömen, welcher auf dem Anschlussstutzen 26 sitzt. Hiernach kann das abgeführte Fluid 33 fachgerecht entsorgt werden.

Falls sich während des Einschraubens des Anschlusselements 21 in den Einsatz 5 eine Leckage 36 zwischen dem zweiten Gegengewinde 17 und dem Gewinde 23 ergibt, so wird diese in einer von dem Steg 31 und der Rohraußenwand 37 begrenzten Mulde 38 aufgefangen. Mittels einer Öffnung 39 in dem Rohrabschnitt 22 im Bereich des Bodens der Mulde 38 wird die Leckage in den Kanal 35 geführt.

Die Gewinde und Gegengewinde 11, 13, 17, 23 können so ausgelegt sein, dass das Verschlusselement 12 bei teilweise oder vollständig eingeschraubtem Anschlusselement 21 das Gegengewinde 13 verlässt (d.h., das Verschlusselement 12 ist vollständig aus dem ersten Gegengewinde 13 ausgeschraubt). Das Verschlusselement 12 verbleibt hiernach in dem Behälter 2 und kann nicht ohne weiteres wieder in das erste Gegengewinde 13 eingeschraubt werden. Dies ist aber unschädlich, da die Filtereinrichtung 1 sowieso nach Ablassen des Fluids entsorgt wird.

## Patentansprüche

1. Filtereinrichtung (1) zum Filtern eines Fluids (33) mit einer Öffnung (14) zum Ablassen des Fluids (33), einem ersten Gegengewinde (13), einem Verschlusselement (12), welches für ein fluiddichtes Verschließen der Öffnung (14) mit einem Gewinde (11) desselben in das erste Gegengewinde (13) eingeschraubt ist, einem zweiten Gegengewinde (17), in welches zum gleichzeitigen Ausschrauben des Verschlusselements (12) aus dem ersten Gegengewinde (13) und dadurch Freigeben der Öffnung (14) zum Ablassen des Fluids (33) ein Anschlusselement (21) mit einem Gewinde (23) desselben einschraubbar ist.

2. Filtereinrichtung nach Anspruch 1, wobei das Verschlusselement (12) einen Kopplungsabschnitt (20) aufweist, welcher mit einem Kopplungsabschnitt (24) des Anschlusselements (21) für das Ausschrauben des Verschlusselements (12) drehfest in Eingriff bringbar ist.

3. Filtereinrichtung nach Anspruch 2, wobei der Kopplungsabschnitt des Verschlusselements (12) sich parallel zur Drehachse (9) des Gewindes (11) des Verschlusselements (12) erstreckende Vorsprünge (20) aufweist, welche mit korrespondierenden Vorsprüngen (24) des Kopplungsabschnitts des Anschlusselements (21) in Eingriff bringbar sind.

4. Filtereinrichtung nach einem der Ansprüche 1 - 3, wobei das Verschlusselement (12) einen Dichtungsabschnitt (15), welcher in dem eingeschraubten Zustand des Verschlusselements (12) gegen einen korrespondierenden, die Öffnung (14) begrenzenden Dichtungsabschnitt (16) abdichtet, und einen das Gewinde (11) des Verschlusselements (12) aufweisenden Abschnitt (19) umfasst, in welchem ein Durchbruch (34) ausgebildet ist, durch den in einem zumindest teilweise ausgeschraubten Zustand des Verschlusselements (12) das Fluid (33) nach Passieren der Öffnung (14) abläuft.

5. Filtereinrichtung nach einem der Ansprüche 1 - 4, ferner aufweisend eine Wandung (3) mit einer Öffnung (4) sowie einem Einsatz (5), welcher in die Öffnung (4) fluiddicht eingesetzt ist und die Öffnung (14) zum Ablassen des Fluids (33) ausbildet.

6. Filtereinrichtung nach einem der Ansprüche 1 - 5, wobei das Gewinde (11) des Verschlusselements (12) bei einem teilweisen oder vollständigen Einschrauben des Anschlusselements (21) mit dem ersten Gegengewinde (13) irreversibel außer Eingriff gerät.

7. Satz (32) mit einer Filtereinrichtung (1) nach einem der Ansprüche 1 - 6 und einem Anschlusselement (21), welches zum gleichzeitigen Ausschrauben des Verschlusselements (12) aus dem ersten Gegengewinde (13) und dadurch Freigeben der Öffnung (14) zum Ablassen des Fluids (33) mit einem Gewinde (23) desselben in das zweite Gegengewinde (17) einschraubbar ist.

8. Satz nach Anspruch 7, wobei das Anschlusselement (21) einen Kopplungsabschnitt (24) aufweist, welcher mit dem Kopplungsabschnitt (20) des Verschlusselements (12) drehfest in Eingriff bringbar ist, wobei bevorzugt der Kopplungsabschnitt des Anschlusselements (21) sich parallel zur Drehachse (25) des Gewindes (23) des Anschlusselements (21) erstreckende Vorsprünge (24) aufweist, welche mit den Vorsprüngen (20) des Kopplungsabschnitts des Verschlusselements (12) drehfest in Eingriff bringbar sind.

9. Satz nach Anspruch 7 oder 8, wobei das Anschlusselement (21) einen Rohrabschnitt (22) aufweist, welcher in einem eingeschraubten Zustand des Anschlusselements (21) mit der Öffnung (14) zum Ablassen des Fluids (33) in fluidischleitender Verbindung steht, wobei bevorzugt der Kopplungsabschnitt (24) des Anschlusselements (21) an einem Ende des Rohrabschnitts (22) ausgebildet ist.

10. Satz nach einem der Ansprüche 7 - 9, wobei das Anschlusselement (21) ein Element (27) zum Drehen des Anschlusselements (21) für ein Ein- oder Ausschrauben desselben aus dem zweiten Gegengewinde (17) und einen Auffang (38) für zwischen dem zweiten Gegengewinde (17) und dem Gewinde (23) des Anschlusselements (21) ausgetretenes Fluid (36) aufweist.

11. Verfahren zum Ablassen eines Fluids (33) aus einer Öffnung (14) einer Filtereinrichtung (1) zum Filtern des Fluids (33), insbesondere einer Filtereinrichtung (1) nach einem der Ansprüche 1 - 6, wobei ein die Öffnung (14) fluiddicht verschließendes Verschlusselement (12) durch Einschrauben eines Anschlusselements (21) gleichzeitig ausgeschraubt wird, wobei das Verschlusselement (12) die Öffnung (14) freigibt und das Fluid (33) durch die Öffnung (14) abgelassen wird.

12. Verwendung der Filtereinrichtung (1) nach einem der Ansprüche 1 - 6 als Einwegfilter, insbesondere Einwegölfilter.
